# EUROPEAN PATENT APPLICATION

(11) **EP 1 176 760 A1**
(43) Date of publication of application: **30.01.2002**
(21) Application number: 00116067.0
(22) Date of filing: 27.07.2000
(51) Int. Cl.: H04L 12/28, H04L 29/06

(54) **Method of establishing access from a terminal to a server**

(71) Applicant: TELEFONAKTIEBOLAGET LM ERICSSON, 126 25 Stockholm (SE)
(72) Inventor: Ström, Georg, 4320 Lejre (DK)
(74) Representative: Roerboel, Leif

(57) **Abstract**

The present invention relates to a method of establishing access from a terminal 5,105 to a server 20,120, which is in non-permanent connection to the server 20,120. Authentication procedures after establishing of the connection delay access to the requested server. The method according to the invention allows request of the particular server before or parallel with the authentication process.

## Description

### TECHNICAL FIELD

The present invention relates to a method of establishing access from a terminal to a server of the kind set forth in the preamble of claim 1. The present invention relates further to a terminal for use with the method of the kind set forth in claim 11 and to a server for use with the method of the kind set forth in claim 12. The present invention also relates to a system for establishing access to a server of the kind set forth in claim 13.

### BACKGROUND ART

Computer network connections are generally of two different types: non-permanent connections, generally referred to as dial-up connections, and permanent connections, generally referred to as dedicated network connections.

Access to servers as the Internet is typically done from a personnel electronic device such as a computer, personal electronic assistant or a cellular phone through a dial-up connection.

To avoid incurring hourly on-line server or access charges and telephone usage charges or in order to allow other use of the telephone line, dial-up connections are usually disconnected from computer networks and connected to the network only as needed. The PPP (Point to Point Protocol RFC1331) with HTTP (HyperText Transfer Protocol) and PAP (Password Authentication Protocol) or CHAP (Challenge Handshake Authentication Protocol RFC1334) disclose a method of establishing access from a personal computer. This method requires the user authentication data to be sent before access to the requested server is allowed.

The GSM (Global System for Mobile Communications) protocol discloses a method of establishing access through a mobile telephone to a cellular phone network. Mobile telephones are usually not in permanent connection with the cellular network in order to avoid premature decharging of the batteries, or to avoid being disturbed the phone is switched off or simply because the connection is lost. The GSM protocol requires the user authentication data to be sent before access to the telephone server is allowed.

The authentication process takes a certain time which is caused by e.g. the challenge response algorithm that requires multiple transmissions, the verification of the authentication data in a distant database and/or the verification of the user's account in a distant database.

The delay caused by the authentication process when establishing access to the server is experienced as inconvenient and irritating to many users.

### DISCLOSURE OF THE INVENTION

It is the object of the invention to provide a method of the kind referred to above, which allows faster access to a server. This object is achieved by the characterising features of claim 1. By sending the data for the server before or parallel with the authentication, the server can be prepared for access and give access during the authentication procedure.

It is another object of the invention to provide a terminal of the kind referred to above, which allows faster access to a server. This object is achieved by the characterising features of claim 11. By sending the authentication data before or parallel with the data for the server, the server can be prepared for access and give access during the authentication procedure.

It is another object of the invention to provide a server of the kind referred to above, which allows faster access to a server. This object is achieved by the characterising features of claim 12. By prompting for the authentication data before or parallel with the data for the server, the server can be prepared for access and give access during the authentication procedure.

It is yet another object of the invention to provide a system comprising a terminal and a server of the kind referred to above, which allows faster access to a server. This object is achieved by the characterising features of claim 13. By sending data for the server before or parallel with the authentication data, the server can be prepared for access and give access during the authentication procedure.

### BRIEF DESCRIPTION OF THE DRAWINGS

In the following detailed part of the description, the present invention will be explained in more detail with reference to the exemplary embodiments of the invention shown in the drawings, in which
Figure 1 is a diagram illustrating a PC to server connection, and
Figure 2 is a diagram illustrating a mobile phone connection to a network subsystem.

### DETAILED DESCRIPTION OF THE INVENTION

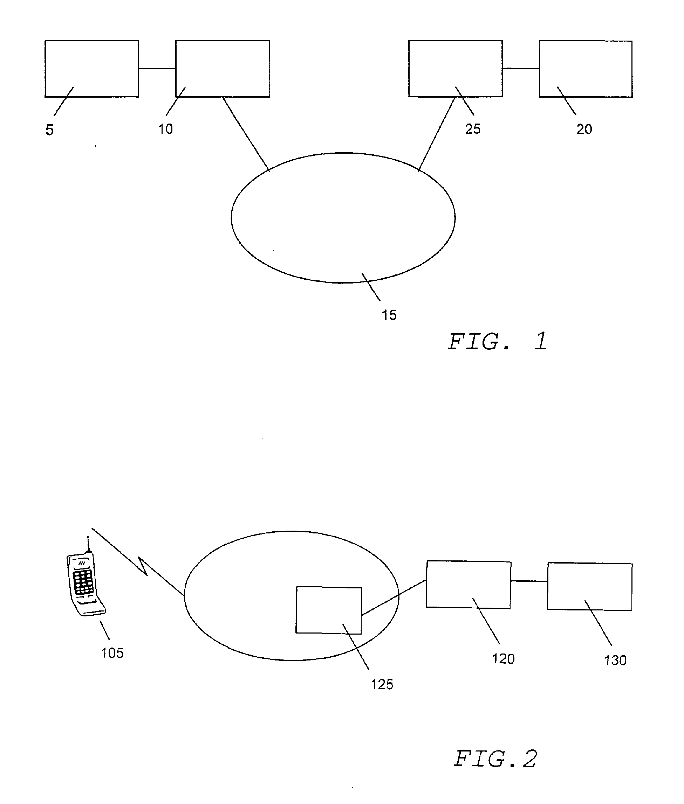

With reference to Figure 1 and Table 1a, the prior art method will be described. A personnel computer (PC) 5 is connected to a modem 10, which may be of the ISDN type, to a switching network 15 such as the public telephone network. A server 20 such as an Internet access server is connected to the Internet. A connection between the PC 5 to the Internet access server 20 is established through the modem 10 which connects the PC to the switching network 15. The Internet server provider 20 is on the other hand connected to the switching network 15 to a point of presence (POP) 25. When a connection between the PC and the Internet server provider computer 20 is to be established a dial-up connection is set up by the modem 10 dialling a predetermined telephone number at which the POP can be contacted. When the telephone connection has been established, a handshake takes place in which the hardware description, the speed of the connection, the compression method and the bit rate are determined. With an ISDN type of connection, this procedure takes approx. 0.5 to 1 sec. According to the prior art method (cf. Table 1a), a request for a particular server from the Internet server provider is sent in accordance with the point-to-point protocol (PPP) (defined in RFC1331), the password for authentication protocol (PAP), the challenge of indication protocol (CHAP) (PAP and CHAP are defined in RFC1334), calling line identification (CLI) (stored in ISDN while connected) and/or a remote access of indication (RADI) US. These protocols are described in international standards wellknown to the skilled person. All these protocols have in common that before network protocol packets can be exchanged, an authentication procedure has to be completed. According to the PPP, the authentication protocol must be used during the link establishment phase. Only a link quality determination may occur concurrently. Advancement from the authentication phase to the network-layer protocol phase must not occur until the PEER is successfully authenticated. In the event of failure to authenticate, PPP should proceed instead to the link termination phase. The PC only receives data after the PC has been allocated an IP-address. According to the existing protocols, the requesting computer does not receive an IP-address until the authentication process is positively completed.

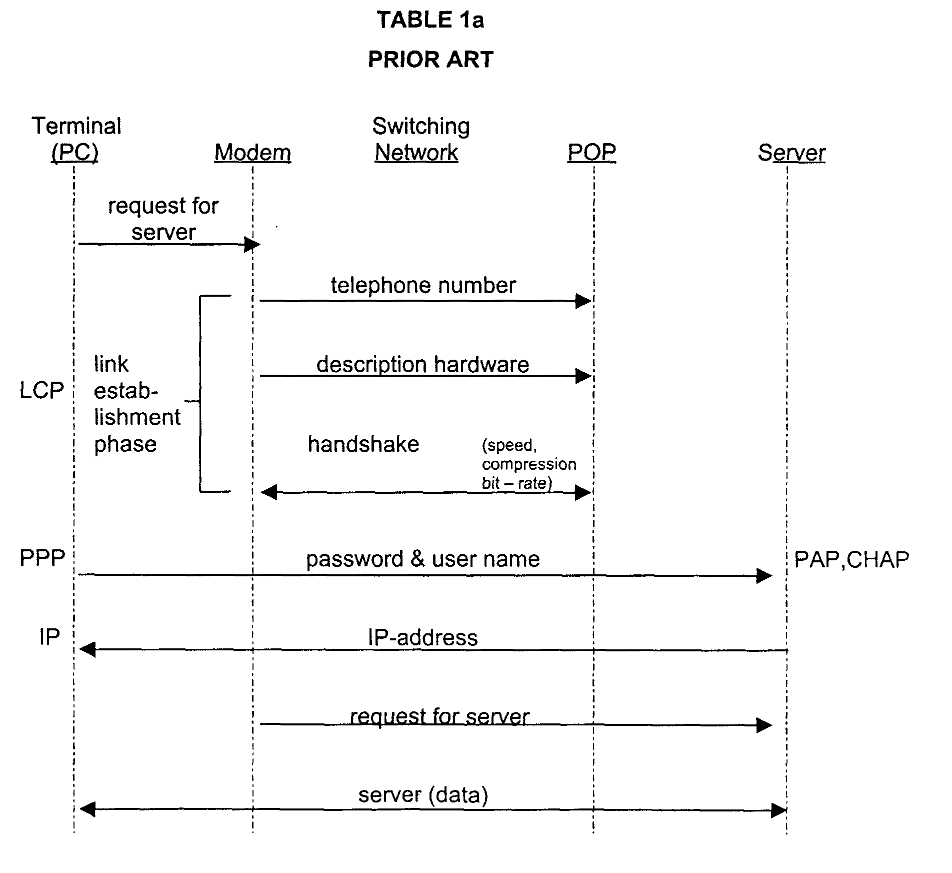

According to the present invention, which is set out in Table 1b, the request for server is sent before or parallel with the authentication procedure. The PPP, IP, PAP and CHAP protocols are modified such that the IP-address is sent back to the PC at the same time or before the terminal sends the authentication data in the form of password and user name, as shown in Table 1b below.

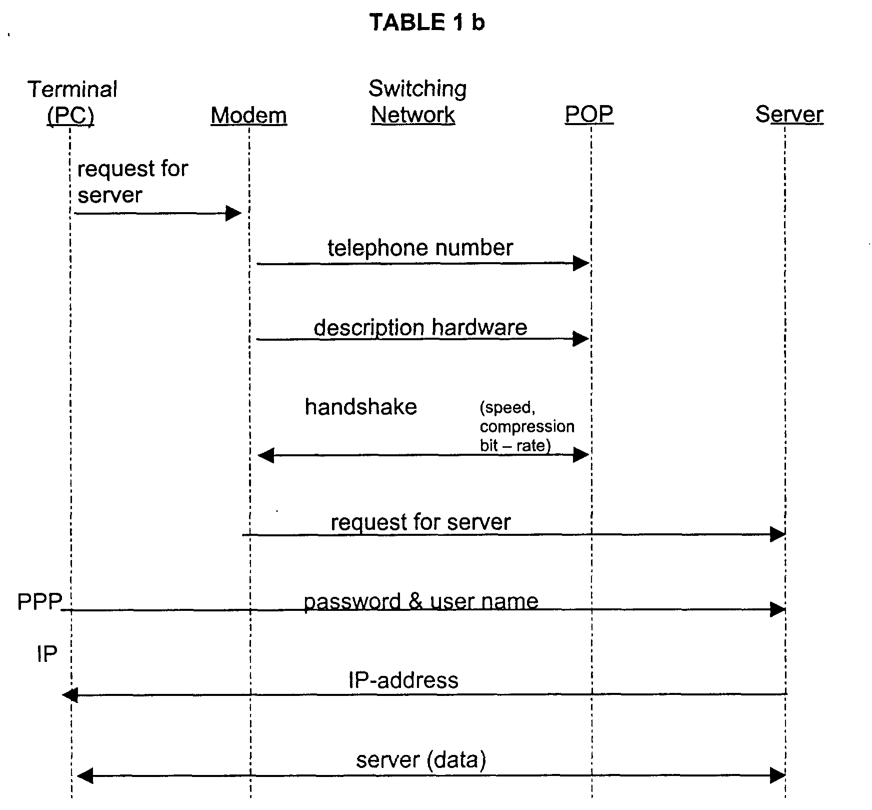

With reference to Figure 2 and Tables 2a and 2b, a second embodiment of the invention will be described.

Figure 2 illustrates the architecture of a mobile phone network such as a GSM network. The network is composed of several functional entities, whose functions and interfaces are specified. The network can be divided into three broad parts.
1. The mobile phone 105 carried by the subscriber.
2. The base station subsystem 125 controls the radio link with the mobile terminal 105.
3. The network subsystem 120, including the mobile servers Switching Centre (MSC), performs the switching of calls between users.

The mobile phone 105 and the Base Station Subsystem 125 communicate across a radio link. The Base Station Subsystem 125 communicates with the Mobile servers Switching Centre 120.

The mobile phone comprises a Subscriber Identity Module (SIM) in the form of a smart card (not shown). The SIM provides personal mobility so that the user can have access to subscribed servers irrespective of a specific terminal.

By inserting the SIM card into another GSM terminal (i.e. mobile phone 105), the user is able to receive calls at that terminal, make calls from that terminal, and receive other subscribed servers.

The mobile phone 105 itself is identified by the International Mobile Equipment Identity (IMEI). The SIM card contains the International Mobile Subscriber Identity (IMSI) used to identify the subscriber to the system, a secret key for authentication, and other information. The IMEI and the IMSI are independent, thereby allowing personal mobility. The SIM card may be protected against unauthorized use by a password or personal identity number.

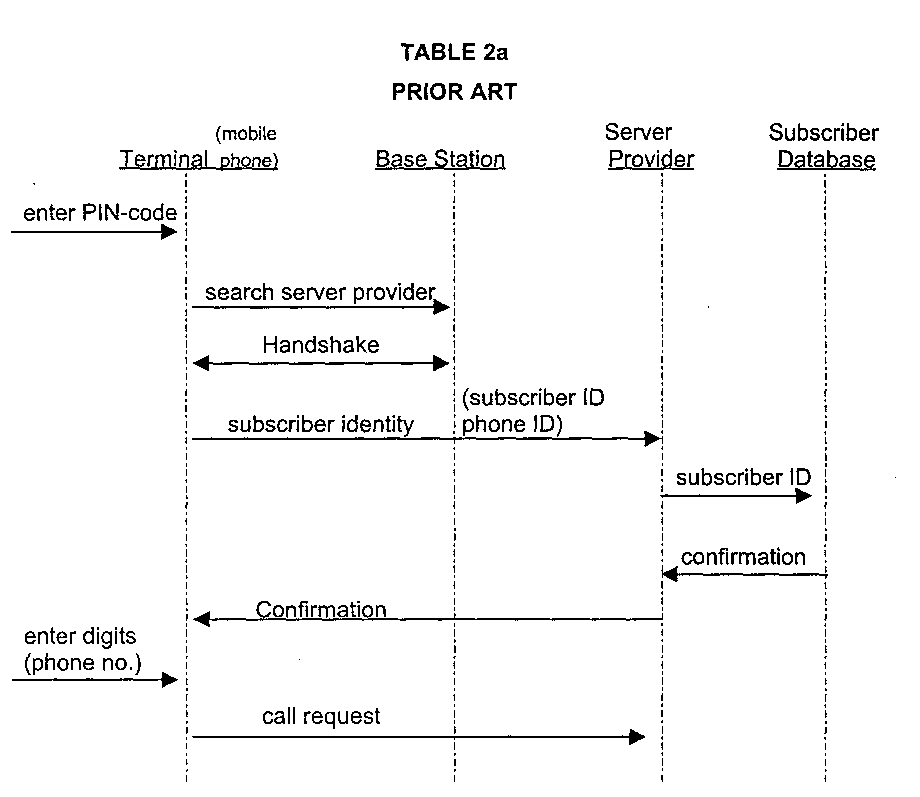

The main component of the Network Subsystem is the Mobile servers Switching Center 120 (MSC). It acts like a normal switching node of the PSTN or ISDN and additionally, provides all the functionality needed to handle a mobile subscriber, such as registration, authentication, location updating, handovers, and call routing to a roaming subscriber.

The other two registers are used for authentication and security purposes. The Equipment Identity Register (EIR) is a database that contains a list of all valid mobile equipment on the network, where each mobile station is identified by its International Mobile Equipment Identity (IMEI). An IMEI is marked as invalid if it has been reported stolen or is not type approved. The Authentication Center (AuC) is a protected database that stores a copy of the secret key stored in each subscriber's SIM card, which is used for authentication and encryption over the radio channel.

A hand shake is carried out and the subscriber identity is sent to the base station which is connected to the server provider. The subscriber ID is sent from the server to the subscription database 130, which may be at another server provider, for verification. Upon positive identification, a confirmation is sent back to the terminal 105 (mobile phone). Thereupon, the terminal 105 allows the user to enter the digits for the requested server (phone number) and a call request is sent.

The SIM card in the mobile phone 105, and the Authentication Center (AuC) are involved in the authentication process. A copy of a secret key identifying each user is stored in the SIM card and the AuC. After the dial-up connection is established, the AuC generates a random number that it sends to the mobile phone. Both the mobile and the AuC then use the random number, in conjuction with the subscriber's secret key and a ciphering algorithm called A3, to generate a signed response (SRES) that is sent back to the AuC. If the number sent by the mobile phone 105 is the same as the one calculated by the AuC, the authentication is positive.

Another level of security is performed on the mobile equipment itself, as opposed to the mobile subscriber.

The mobile phone itself is also provided with an identification data the so-called unique International Mobile Equipment Identity (IMEI) number. The Equipment Identity Register (EIR) stores status of the IMEI's.

Upon an IMEI query to the EIR is response one of the following:
White-listed: The mobile phone connection to the network is continued.
Black-listed: The mobile phone has either been reported stolen, or is not type approved . The connection to the network is terminated.

Table 2b describes the access procedure according to the second embodiment of the invention.

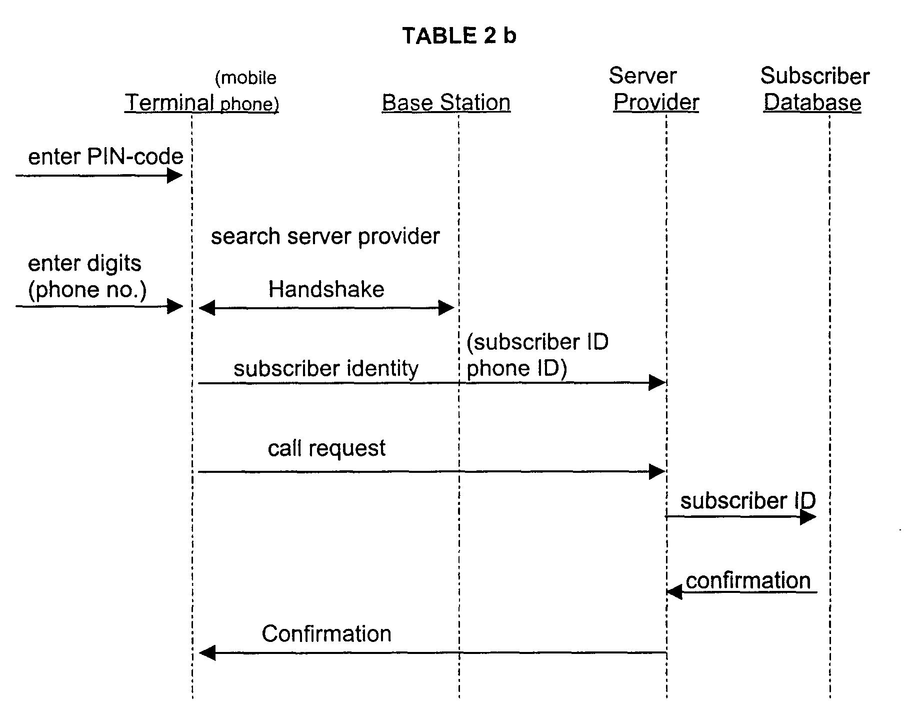

Before the mobile phone 105 has found a free channel and carried out a "handshake" for determining the hardware connection, it allows the user to enter the desired telephone number.

As soon as the connection is built up and the handshake is finished, the mobile phone 105 sends the desired phone number to the base station 125. This means that the base station 125 can pass the desired phone number on to the switching central 120 and connect the mobile phone to the desired telephone number during or before authentication.

The authentication is carried out as described above while a connection to the desired phone number is being established or is ongoing. The service is terminated and possibly the radio connection between the mobile phone and the base station is terminated, upon failure of the authentication.

According to an embodiment of the invention, the access to the requested servers is during authentication withheld when the last authentication failed. Access during or before authentication may also be denied when more than a predetermined time has passed since the last positive authentication or access. This time could be in the order of 1 day for mobile phones and in the order of 15-45 minutes for Internet connections.

Access during or before authentication may also be denied when a predetermined number of failed authentications are registered by the server within a predetermined period of time.

### LIST OF REFERENCE NUMERALS

- 5: PC
- 10: Modem
- 15: Switching network
- 20: Server
- 25: POP
- 105: Mobile phone
- 120: Mobile phone central
- 125: Base station
- 130: Subscription database

## Claims

1. A method of establishing access from a terminal (5, 105) to a server (20, 120) which is in non-permanent connection to the server (20, 120) comprising the steps of
- establishing a connection between the terminal (5, 105) and the server (20, 120),
- carrying out an authentication process, and
- allowing access to the server (20, 120) upon positive authentication,
- sending data for the requested server from the terminal (5, 105) to the server (20, 120),
**characterized by**
- sending the data for the requested server (20, 120) before or parallel with the authentication process so that the server (20, 120) may be prepared for access during the authentication process.

2. Method according to claim 1, **characterised by** the step of giving access to the requested server (20, 120) before positive authentication.

3. Method according to claim 1 or 2, **characterised by** the step of denying access to the requested server (20, 120) if the authentication fails.

4. Method according to claims 1 or 3, **characterised by** the step of withholding access to the requested server (20, 120) until positive authentication when the last attempt of authentication failed.

5. Method according to claims 3 or 4, **characterised by** the step of withholding access to the server (20, 120) before the authentication process is finished when more than a predetermined time has passed since the last access.

6. Method according to any of claims 3 to 5, **characterised by** the step of withholding access to the server (20, 120) before the authentication process is finished when more than a predetermined of failed authentications are registered within a predetermined period of time.

7. Method according to any of claims 1-6, **characterized in that** the terminal is a personal computer (5).

8. Method according to any of claims 1-7, **characterized by** the server being a computer, preferably an Internet access server (20).

9. Method according to claim 8, wherein the personal computer (5) is connected to the server (20) via a modem (10) connected to the public telephone network (15) and where the server (20) is connected to the public telephone network (15) through a modem (25) in the form of a point of presence.

10. Method according to any of the claims 1-6, **characterized in that** the terminal is a mobile phone (105) and the server is a cellular phone network comprising base stations (125, 120) for radiographic communication with the mobile phone (105).

11. Terminal such as a personal computer (5) or a mobile telephone (15) for use with the method according to claims 1 to 10 ,comprising
- means such as a modem (10) or radio transmitter/receiver for establishing connection to a server such as an Internet access server (20), an Internet page server (20) or a cellular phone network (120, 125),
- means for providing authentication data, such as a keyboard, a memory or a smart card,
- means for sending the authentication data such as user identity and/or password or mobile phone id-number to the server, and
- means for sending data for the requested server such as an URL address of a telephone number to the server (20, 120),
**characterised by** means for activating the means for sending data for the requested server before or at the same time with the means for sending the authentication data.

12. Server such as an Internet access provider (20), an Internet page server (20) or a cellular phone network (120) comprising,
- means such as an Internet access server (20) or a base station (125) for establishing a connection with a terminal such as a personal computer (5) or a mobile telephone (105),
- means for prompting for authentication data such as user identity and/or password,
- means for carrying out an authentication process,
- means for prompting for data for the requested server such as an URL address of a telephone number to the server,
**characterised by** means for activating the means for prompting for data for the requested server before or at the same time with the means for prompting for the authentication data.

13. System for carrying out the method according to any of claims 1 to 10 comprising a terminal according to claims 11 to 12 and a server according to claims 1 to 12.
